# EUROPÄISCHE PATENTSCHRIFT

(11) **EP 1 490 467 B1**
(45) Veröffentlichungstag und Bekanntmachung des Hinweises auf die Patenterteilung: **19.09.2007**
(21) Anmeldenummer: 03717217.8
(22) Anmeldetag: 19.03.2003
(51) Int. Cl.: C11D 3/37, C11D 11/00, C08L 83/14, C08L 83/12

(54) **ORGANOPOLYSILOXANE-ENTHALTENDE ZUSAMMENSETZUNG, VERFAHREN ZU IHRER HERSTELLUNG UND DEREN VERWENDUNG**
COMPOSITION CONTAINING ORGANOPOLYSILOXANES, METHOD FOR THE PRODUCTION THEREOF AND USE OF THE SAME
COMPOSITION CONTENANT DES ORGANOPOLYSILOXANES, SON PROCEDE DE PRODUCTION ET SON UTILISATION

(30) Priorität: 22.03.2002 DE 10213020
(43) Veröffentlichungstag der Anmeldung: 29.12.2004
(73) Patentinhaber: Momentive Performance Materials GmbH & Co. KG, 51368 Leverkusen (DE)
(72) Erfinder: NIENSTEDT, Sabine, 53115 Bonn (DE); LANGE, Horst, 44879 Bochum (DE); SCHNERING, Albert, 51067 Köln (DE); KROPFGANS, Martin, 51519 Odenthal (DE)
(86) Internationale Anmeldenummer: PCT/EP2003/002862
(87) Internationale Veröffentlichungsnummer: WO 2003/080788

(56) Entgegenhaltungen:
- EP-A- 0 458 969
- EP-A- 0 673 995
- EP-A- 0 692 513
- DE-A- 4 009 308
- US-A- 5 206 328
- US-A- 5 534 179
- US-A- 5 759 983
- US-A1- 2002 000 009

## Beschreibung

Formulierungen für Reinigungsmittel harter Oberflächen wie Keramik, Fliesen, Glas, Plaste, emaillierte Flächen, Metalle und Fussbodenbeläge sind seit langem bekannt. Eine umfassende Zusammenstellung der verwendeten Rohstoffe und ihrer Wirkung findet sich z.B. im Jahrbuch für den Praktiker (aus der Öl-, Fett-, Seifen-, Körperpflegemittel-, Wachs- und sonstigen chem.-techn. Industrie), 22. Ausgabe, 1979.
Hollemann-Wiberg, Lehrbuch der Anorganischen Chemie, 81-90. Auflage, 1976 beschreibt z. B. die Verwendung von Peroxiden als Bleichmittel und deren desinfizierende Wirkung für medizinische und kosmetische Zwecke.
US 4,005,030 beschreibt anionische Reinigungsformulierungen für harte Oberflächen welche kationische Organoalkoxysilane und Tensid enthalten. Die Organosilane verbessern hierbei die Anti-Hafteigenschaften der Oberfläche gegenüber Schmutzpartikeln.
US 4,337,166 beschreibt die Verwendung eines cyclischen Siloxanes in einer Formulierung zur Reinigung harter Oberflächen.
US 4,689,168 beschreibt die Verwendung eines cyclischen Polydimethylsiloxanes in einer 2-phasigen Formulierung zur Reinigung harter Oberflächen.
WO 99/31212 beschreibt eine Formulierung zur Reinigung harter Oberflächen, welche eine synergistische Kombination dreier Materialien enthält, bestehend aus benetzend wirkendem Tensid (superwetting), oberflächenspannungreduzierendem Silikonglykol und einer entfettend wirkenden organischen Komponente.
Die DE 4 032 126 A1 offenbart die Verwendung von Wasserstoffperoxid als Bestandteil eines Reingungsmittels in Verbindung mit Rhabarbersaft und anionischen sowie nichtionischen Tensiden für harte Oberflächen.
US 5,962,388 beschreibt Zusammensetzungen für die Reinigung von Oberflächen, die Polycarbonsäuren, mehr als zwei anionische Tenside, Wasserstoffperoxid, kurzkettige Polyether und ein zusätzliches ausgewähltes hydrophiles Polymer enthalten.
US 6,136,766 offenbart Zusammensetzungen von wässrigen und nicht wässrigen Reinigungsmitteln, die aus niedermolekularen cyclischen Siloxanen und hydrophilen Lösungsmitteln, wie z.B. Polyetherpolysiloxanen besteht.
US 4,960,533 beansprucht die Verwendung eines Polyetherpolysiloxanes in Verbindung mit einem cyclischen Polydimethylsiloxane sowie Pentandicarbonsäure in einer Formulierung zur Entfernung von Schmutzresten an harten Oberflächen.
US 5,439,609 beansprucht eine wässrige Reinigungszusammensetzung, die ein Polyetherpolysiloxan, ein Alkylethoxylat, einen Glycerinether sowie chelatisierende Agentien enthält. Diese Formulierung soll gleichzeitig eine Reinigung ermöglichen und Rückbeschmutzung verhindern.
In 'Silicone - Chemie und Technologie', Vulkan-Verlag Essen, 1989 und in W. Noll, Chemie und Technologie der Silicone, Verlag Chemie, Weinheim, 1968, werden die Herstellung, Struktur, Verwendung von Polyetherpolysiloxanen sowie deren die Oberflächenspannung vermindernde Eigenschaft beschrieben. Besonders die Verminderung der Oberflächenspannung als typische Eigenschaft von Polyetherpolysiloxanen kann, nach deren Abscheidung auf harten Oberflächen zu einer Erschwerung der Wiederbeschmutzung in Verbindung mit einer ebenfalls verbesserten Wasserabweisung zu einer Verminderung der Bildung von Kalkrückständen führen.
Die im Stand der Technik beschriebenen Peroxid-Verbindungen enthaltenden Reinigungszusammensetzungen weisen grundsätzlich das Problem der Instabilität der Peroxid-Verbindungen auf, was zu einer geringen Lagerstabilität insbesondere bei erhöhten Temperaturen führt.

Die Aufgabe der vorliegenden Erfindung bestand daher in der Bereitstellung eines lagerstabilen Peroxid-Verbindungen enthaltenden Reinigungsmittels mit ausgezeichneter Reinigungswirkung, insbesondere verringerter Wiederverschmutzung.
Überraschend entdeckten die Erfinder, dass Peroxid-Verbindungen enthaltende Zusammensetzungen durch den Zusatz von Polyetherpolysiloxan-Verbindungen stabilisiert werden können und dabei gleichzeitig die Wirkung der Zusammensetzungen auf die Verhinderung einer Wiederbeschmutzung verbessert werden kann. Besonders ausgeprägt ist die Stabilisierung, wenn die verwendeten Polyetherpolysiloxane einem besonderen Reinigungsverfahren unterworfen wurden.

Der Erfindung liegt die überraschende Beobachtung zugrunde, dass der Zusatz eines Polyetherpolysiloxanes zu einer wässrigen Lösung von Wasserstoffperoxid dessen autoxidativen Zerfall verlangsamt und anderseits darüber hinaus die Erkenntnis, dass die Zersetzung von wässrigen sauren Wasserstoffperoxidlösungen verlangsamt werden kann, wenn ein von Metallen und anderen die Peroxidzersetzung fördernden Spurenstoffe gereinigtes Polyetherpolysiloxan eingesetzt wird.
Die vorliegende Erfindung stellt somit eine Zusammensetzung, die erhältlich ist durch Zusammengeben von:
a) Wasser,
b) mindestens einer Peroxid-Verbindung,
c) mindestens einer Säure,
d) mindestens einem Organopolysiloxan mit mindestens einer Alkylgruppe, wobei die Alkylgruppe mindestens eine Ethergruppe und gegebenenfalls mindestens eine OH-Gruppe enthält,
e) gegebenenfalls mindestens einem niedermolekularen Siloxan und
f) gegebenenfalls mindestens einem Hilfsstoff.

Bei der Komponente a) handelt es sich um Wasser.

Das zur Herstellung der Zusammensetzung für die Komponente a) verwendete Wasser schließt sauberes Leitungswasser oder bevorzugt entionisiertes Wasser, welches mit einer Kombination aus einem anionischen und kationischen Standard-Ionen-austauscher gereinigt wurde, ein. Bevorzugt handelt es sich um entionisiertes Wasser.

Die Peroxid-Verbindung als Komponente b) schließt neben Wasserstoffperoxid beliebige anorganische und organische Peroxide ein. Eine umfangreiche Beschreibung anorganischer Peroxide findet sich in Hollemann-Wiberg, Lehrbuch der Anorganischen Chemie, 81-90. Auflage, 1976, die hier incl. der Perborate eingeschlossen sind. Organische Peroxide sind in Morrison-Boyd, Lehrbuch der Organischen Chemie 2., berichtigte Auflage, 1984 beschrieben, und sind ebenfalls incl. der Hydroperoxide und Persäuren in der vorliegenden Erfindung eingeschlossen. Es ist möglich, Mischungen von Peroxid-Verbindungen zu verwenden. Besonders bevorzugt ist Wasserstoffperoxid.

Der Gehalt der Peroxid-Verbindung wird zweckmäßig so gewählt, dass sich ein Gehalt an peroxidisch vorliegendem (aktivem) Sauerstoff von 0,001 bis 10 Gew.-%, bevorzugt 0,1 bis 3 bezogen auf das Gesamtgewicht der Zusammensetzung nach der unmittelbaren Herstellung (< 1 h) der Mischung einstellt. Der Gehalt an peroxidisch vorliegendem Sauerstoff bezieht sich dabei auf ein Sauerstoffatom, das in der -O-O-Gruppe vorliegt.

Der molare Peroxidgehalt übersteigt zweckmäßig den molaren Gehalt anderer anwesender oxidierbarer Komponenten, Hilfsstoffe oder anwesenden Nebenprodukten, wie z.B. oxiderbaren Tensiden oder Alkoholen. Der Gehalt an peroxidischem bzw. aktivem Sauerstoff wird fotometrisch über eine Absorptionsmessung bei 508 nm mit einem UV Fotospektrometer über die Bildung des Eisen(III)-rhodanids bestimmt.

Dem Fachmann ist dabei klar, dass sich bei der Herstellung der erfindungsgemäßen Zusammensetzung neue Peroxoverbindungen bilden können.

Beispielsweise können sich aus der Umsetzung der Peroxide mit den Säuren der Komponente c) Persäuren bilden. Der Gehalt an aktivem Sauerstoff schließt dabei den gesamten Gehalt an peroxidischem Sauerstoff der Zusammensetzung ein, also auch des Sauerstoffs der Peroxid-Verbindungen, die sich erst beim Zusammengeben der Komponenten bilden.

Die als Komponente c) verwendete Säure kann eine beliebige anorganische oder organische Säure einschließen, insbesondere eine Brönstedt-Säure. Organische Säuren schließen beispielsweise ein: mehrbasige Carbonsäuren mit bis zu 8 Kohlenstoffatomen, wie Weinsäure, Äpfelsäure, Glutarsäure, wie sie z. B. in US 5,439, 609, Spalte 3 beschrieben sind, und wie sie bei Reinigungszusammensetzungen üblich bzw. zulässig sind.
Bevorzugt werden erfindungsgemäß Mineralsäuren, wie Schwefelsäure, Salzsäure oder Phosphorsäure oder ausgewählte Säuren, wie sie beispielsweise in EP 336 878 S.2 beschrieben sind, verwendet. Besonders bevorzugt ist Schwefelsäure.
Es ist möglich, mehrere Säuren in Kombination zu verwenden.
Die Menge der erfindungsgemäß verwendeten Säure in der Zusammensetzung wird zweckmäßig so gewählt, dass sich ein pH-Wert von etwa 0 bis 7, bevorzugt von 0 bis 6, besonders bevorzugt von 0 bis 5 einstellt.
Die Menge der Säure als Komponente c) wird in Abhängigkeit von der verwendeten Peroxid-Verbindung und der gewünschten Reinigungswirkung geeignet ausgewählt. In einer bevorzugten Variante übersteigt der molare Peroxidgehalt nicht den molaren Gehalt der Säureanionen.
Die Menge der erfindungsgemäß verwendeten Säure beträgt daher zweckmäßig etwa 10 ⁻⁷ - 1 mol/Liter, bevorzugt etwa 10⁻⁵ bis 1 mol /Liter einer Säure, bezogen auf das Äquivalent [H⁺] D.h. es können etwa 10⁻⁷ - 1 mol/Liter einer einbasigen Säure verwendet werden, bei einer zweibasigen Säure die Hälfte der genannten molaren Menge. So können beispielsweise ca. 5 x 10⁻⁷ - 4,8 Gew. % H₂SO₄ verwendet werden.

Bei dem erfindungsgemäß als Komponente d) verwendeten Polyetherpolysiloxan handelt es sich um eine Verbindung, die mindestens einen Polysiloxanrest und mindestens einen Polyetherrest aufweist.
Die Siloxanmoleküle können prinzipiell aus allen Siloxyeinheiten, d. h. R₃SiO_{1/2}, R₂SiO, RSiO_{3/2} oder SiO_{4/2}-Einheiten aufgebaut sein. Die Polysiloxanreste können also auch in geringem Anteil von T- und Q-Einheiten aufweisen. Es werden in diesem Fall flüssige Siloxane bevorzugt. Besonders bevorzugt handelt es sich um lineare oder cyclische Polysiloxanreste. Die mittleren Polymerisationsgrade der Gewichtsmittel M_{w} ergeben sich aus den untengenannten Indices r, x und y.

Besonders bevorzugt handelt es sich bei den erfindungsgemäß verwendeten Polyetherpolysiloxanen um mindestens ein Polyetherpolysiloxan, das aus der Gruppe ausgewählt wird, die aus Polyetherpolysiloxanen der allgemeinen Formeln (I), (II) und (III) besteht:

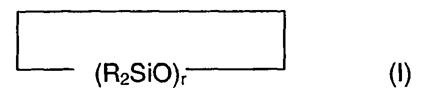

R₃SiO(R₂SiO)ₓSiR₃ (II)

[(R₃SiO_{1/2})₁₋₄(SiO_{4/2})]_{y} (III)

worin
r = 3-10 und bevorzugt 3 bis 5,
x = 0-200 ist, bevorzugt 1 bis 100 ist
y = 1-1000, bevorzugt 1 ist d.h. [(R₃SiO_{1/2})₄(SiO_{4/2})]₁
die Substituenten R gleich oder verschieden sein können und aus der Gruppe ausgewählt werden, die besteht aus:
geradkettigem und verzweigtem C₁-C₁₂-Alkyl, C₆-C₁₄-Cycloalkyl, Phenyl, Phenylalkyl, wie z.B. Phenylethyl (Styryl) -(CH₂)ₙC_{z}F_{2z+1}, worin n = 1-12 und z = 1-12 ist, und einer einer Alkylgruppe, wobei die Alkylgruppe mindestens eine Ethergruppe und gegebenenfalls mindestens eine OH-Gruppe enthält,
mit der Maßgabe, dass mindestens ein Substituent R je Polysiloxanmolekül die genannte Alkylgruppe darstellt, die mindestens eine Ethergruppe und gegebenenfalls mindestens eine OH-Gruppe enthält. Bevorzugt ist R Alkyl, besonders bevorzugt Methyl. D.h. Hydroxyalkylether- und Polyether-poly(dimethylsiloxane) sind besonders bevorzugt.
Bevorzugt ist es, dass dieser Rest über ein Kohlenstoffatom an das Siliziumatom des Polysiloxanrestes gebunden.

Der genannte Rest, der Polyalkylenoxideinheiten enthält, weist statistisch mindestens eine aufeinanderfolgende Alkylenoxy-Einheit, insbesondere eine Ethylenoxy, Propylenoxy und/oder Butylenoxy-Einheit auf. Besonders bevorzugt sind Ethylenoxy-Einheiten. Die Polyalkylenoxideinheiten können dabei Block-Co- oder Ter-Polymereinheiten der genannten Alkylenoxide aufweisen, oder es kann sich um statistische Co- oder Ter-Polymereinheiten handeln.

Die erfindungsgemäß verwendeten Polyetherpolysiloxane können einen oder mehrere gegebenenfalls verschiedene Polyalkylenoxideinheiten enthaltende Reste aufweisen.

Besonders bevorzugt stellt der genannte Rest, der Polyalkylenoxideinheiten enthält, mindestens eine Seitenkette an den Einheiten R₂SiO, RSiO_{3/2} des genannten Polysiloxanrestes dar, wobei er formal eine Methylgruppe in diesen Siloxyeinheiten ersetzt hat.
Ein besonders bevorzugter Polyalkylenoxideinheiten aufweisender Rest als Substituent R in den Formeln (I), (II) und (III) weist die Formel (IV) auf:

-Z-(CH₂CH₂O)ₐ(CH₂CH{CH₃}O)_{b} (CH₂CH₂CH₂CH₂O)_{c}X_{d}-R¹ (IV).

Darin ist Z ein geradkettiger oder verzweigter Alkyl- oder Cycloalkylrest, der jeweils durch -O-, und/oder -CO- unterbrochen und gegebenenfalls durch mindestens eine OH-Gruppe substituiert sein kann. Bevorzugt weist Z von 1 bis 22 Kohlenstoffatome auf. Diese Reste sind aus Umsetzungen von Alkenylalkoholen, wie Allylalkohol, Alkenyl-oxiranethern wie Allylglycidethern, Vinylcyclohexenoxid, Allylglykosiden, Alkenylpolyol-Partialethern hervorgegangen. Umsetzungen beinhalten beispielsweise die Hydrosilylierung und die Reaktion von Oxiranen mit Alkoholen in beliebiger Reihenfolge. Bevorzugt sind ein -(CH2)₁₋₆-O- oder ein -(CH₂)₁₋₆-O-CH₂ CHOH-CH₂O-Rest. Besonders bevorzugt ist Z = -CH2-CH2-CH2-O-, so dass eine SiCH2-CH2-CH2-O-Bindung resultiert.

Die wahlweise vorliegende Gruppe X wird aus -CO-, -COO- und - CONR²-, worin R² H oder C₁-C₆ Alkyl ist,
- ausgewählt (Die Anbindung an den Polyalkylenoxid erfolgt so, dass keine -O-O- oder -O-N-Bindung resultiert).
   a = 0 bis 2000,
   b = 0 bis 2000,
   c = 0 bis 100, und
   a+b+c ≥ 0
   d = 0 oder 1,
   bevorzugt ist d und c = 0.

Weiterhin ist a bevorzugt 1 bis 100 und b ist bevorzugt 0 bis 20.
R¹ =
H,
C₁-C₂₅ Alkyl,
Amino(C₁-C₂₅)alkyl,
(C₁-C₂₅)Alkoxypoly(C₂-C₄)alkylenoxy(C₁-C₂₅-)alkyl,
Hydroxypoly(C₂-C₄)alkylenoxy(C₁-C₂₅)alkyl,
Aminopoly(C₂-C₄)alkylenoxy(C₁-C₂₅)alkyl,
C₆-C₁₀ Aryl,
(C₆-C₁₀)Aryl(C₂-C₆-)alkyl, und
-(CH₂)ₙC_{z}F_{2z+1}, worin n = 1-12 und z = 1-12 ist,
wobei in den zuvor genannten Resten R gegebenenfalls ein bis drei -CH2-Gruppen durch X, das wie oben definiert ist, -O- oder -NR³-, worin R³ H oder C₁-C₆ Alkyl ist, ersetzt sein können.

Die Indizes a bis c sind dabei die sich aus den Gewichtsmitteln ergebenden mittleren Polymerisationsgrade.

Bevorzugt ist R¹ = Wasserstoff, C₁-C₂₅ Alkyl, insbesondere Methyl. Besonders bevorzugt ist R¹ Wasserstoff.

Die erfindungsgemäß verwendeten Polyetherpolysiloxane der Komponente d) sind zweckmäßig bei 25°C in Wasser löslich oder sie sind in Wasser mindestens selbstemulgierend. D. h. , dass eine Mischung aus Wasser und dem Polyetherpolysiloxan nach dem Vermischen mit einem Rührer über mehr als 30 Tage eine stabile Emulsion bildet, dadurch gekennzeichnet, dass keine Phasentrennung beobachtbar ist.
Die Löslichkeit der erfindungsgemäß verwendeten Polyetherpolysiloxane d) kann dabei durch die Länge des Polyetherestes, die Art der verwendeten Alkylenoxid-Einheiten, die Siloxankettenlänge sowie das Verhältnis von Diorganosiloxyeinheiten zu Polyethersiloxyeinheiten gesteuert werden, so dass sich die gewünschte Löslichkeit einstellt. So beträgt das Verhältnis von Diorganosiloxyeinheiten zu Polyethersiloxyeinheiten bevorzugt nicht mehr als 10:1.
Für den Fall, dass Polyether mit freien OH-Gruppen eingesetzt werden, wählt man den molaren Anteil dieser Polyetherpolysiloxane vorzugsweise kleiner als die molaren Peroxidanteile in der Reinigungszusammensetzung.

Die Herstellung der Polyetherpolysiloxane, die erfindungsgemäß als Komponente d) verwendet wird, erfolgt in an sich bekannter Weise (z.B. US 5,986,122, US 4,857,583, EP 069338, EP 985698). Sie erfolgt beispielsweise durch ein- bzw. mehrstufige Hydrosilylierung des entsprechenden wasserstofffunktionellen Siloxans mit einer geigneten ungesättigten Vorstufe des einzuführenden Substituenten unter Zuhilfenahme eines geeigneten homogenen oder heterogenen Übergangsmetallkatalysators.

Bevorzugte Vorstufen mit denen der genannte Rest, der Polyalkylenoxideinheiten enthält, an die Polysiloxane addiert wird, haben eine endständige C=C-Doppelbindung.
Besonders bevorzugt sind Allylpolyether mit folgender Struktur (V) oder (VI):

H₂C=CH-CH₂-O-(CH₂CH₂O)ₐ(CH₂CH{CH₃}O)_{b}(CH₂CH₂CH₂CH₂O)_{c}X_{d}-R¹ (V)

Diese Allylpolyether können in an sich bekannnter Weise aus Allylalkohol und Oxiranen wie insbesondere Ethylenoxid, Propylenoxid und/oder Butylenoxid hergestellt werden. Die Steuerung der zuvor genannten Indizes a, b und c erfolgt durch die Auswahl entsprechender molarer Verhältnisse. Desweiteren kann man in an sich bekannter Weise durch die gewählte Reihenfolge der Oxirane verschiedene Blockpolyalkylenoxid-Reste oder statistisch verteilte Polyalkylenoxid-Reste erzeugen.
Alternativ können die Polyethergruppen an die Polysiloxane über eine Hydrosilylierung des entsprechenden wasserstofffunktionellen Siloxans mit ungesättigten Epoxiden, wie Allylglycidether, Vinylcyclohexenoxid oder Allylgylkoside und anschliessender Ringöffnung des Epoxidrings mit einem Polyether mit reaktivem Wasserstoff hergestellt werden.

H₂C=CH-CH₂-O-CH₂CHOH-CH₂O-(CH₂CH₂O)ₐ(CH₂CH{CH₃}O)_{b} -(CH₂CH₂CH₂CH₂O)_{c}X_{d}-R¹ (VI)

Geeignete Übergangsmetallkatalysatoren für die Hydrosilylierungen sind allgemein bekannt. Beispielhaft seien an dieser Stelle genannt Übergangsmetallkomplexe des Platin, Palladium. Ruthenium und Rhodium sowie kolloidale Formen dieser Übergangsmetallkomplexe genannt. Bevorzugt sind Übergangsmetallkomplexe des Platin in der Oxidationsstufe (0), (II), (IV) und kolloidales Platin Metall. Besonders bevorzugt sind der Speier-Katalysator (Hexachloroplatinsäure in Isopropanol bzw. Alkohol) und Komplexe des Platin mit Tetramethyldivinyldisiloxane (Karstedt-Katalysator).

Eine besonders ausgeprägte Stabilisierung, der in der Zusammensetzung enthaltenden Peroxid-Verbindung wird erreicht, wenn das oben erhaltene Polyetherpolysiloxan einem zusätzlichen Reinigungsschritt unterzogen wird.
Durch diesen Reinigungsschritt dient insbesondere der Abtrennung der aus der Additionsreaktion (Hydrosilylierung) von Hydrogensiloxanen-/silanen mit Alkenylpolyethern verbliebenen Metallkatalysatoren und anderen Verunreinigungen aus dem entstandenen Polyetherpolysiloxan. Es wurde gefunden, dass die Geschwindigkeit des Abbaus von peroxidischem Sauerstoff insbesondere vom Metallgehalt, d.h. in der Regel vom Platingehalt, und dem Gehalt anderer, oft farbiger Verbindungen im Polyetherpolysiloxan beinflusst wird. Eine geeignete Reinigung gelingt insbesondere dann, wenn Adsorptionsmittel eingesetzt werden, die es ermöglichen, sowohl den Metallgehalt der Übergangs- bzw. Schwermetalle zu vermindern als auch gleichzeitig weitere farbige bzw. trübende , die Zersetzung katalysierenden Verbindungen aus den Polyetherpolysiloxanen Katalysatoren oder sonstigen Verunreinigungen abzutrennen. Ein wesentlicher Reinigungsschritt betrifft die Abtrennung von Metallverbindungen, die zur Addition von Alkenylpolyethern an Hydrogensiloxane bei der Herstellung von Polyetherpolysiloxanen eingesetzt werden und den Katalysatorträger.
In der Literatur sind Verfahren zur Fixierung, Entfernung bzw. Wiedergewinnung von Pt- bzw. Rh-Katalysatoren bekannt. EP 546 716 offenbart einen fixierten Pt-Katalysator auf Träger. US 5,536, 860 nennt weitere Beispiele für fixierte Rhodiumkatalysoren zur Hydrosilylierung. Ähnliche Katalysatoren findet man in US 5, 187, 134. Die US 5,237,019 offenbart. fixierte Hydrosilylierungskatalysatoren mit Aminoalklygruppen als komplexierende Gruppe, die einen Übergang des Metalles in die Lösung des Reaktionsproduktes verhindern sollen. Die US 4,156,689 lehrt die Reinigung von Chlorsilanen vor der Hydrosilylierung, Die US 5,986,122 die Entfernung von Peroxiden durch Säurezugabe vor der Hydrosilylierung. Hier findet sich aber kein Hinweis, wie Metalle und andere Verunreinigungen nach der Hydrosilylierung abzutrennen sind, um die Peroxidzersetzung zu minimieren. US 4,935,550 beansprucht die Extraktion von Rhodium unter Verwendung von polaren und nicht polaren Lösungsmitteln sowie P-haltigen Komplexbildnern. Die US 5,342,526 nennt ein Extraktionsmittel für die Entfernung von Platin oder Palladium aus Reaktionslösungen. US 4,900,520 beschreibt die Abtrennung von Platin mit basischen Ionenaustauscherharzen aus Polyetherpolysiloxanen.

Die Erfinder der vorliegenden Erfindung fanden ein neues bevorzugtes Verfahren zur Reinigung von Polyetherpolysiloxanen, dass besonders vorteilhaft ist. In diesem Verfahren werden die Polyetherpolysiloxane mit Aktivkohle behandelt. Die so gereinigten Polyetherpolysiloxane werden in Reinigungszusammensetzungen der vorliegenden Erfindung verwendet.

Bevorzugt erfolgt die Behandlung der durch Hydrosilylierungsreaktion hergestellten Polyetherpolysiloxane durch Verrühren mit ausgewählter Aktivkohle oder einer Mischung aus Aktivkohle und Wasser oder einer Mischung aus Aktivkohle und Alkohol und anschließender Filtration, um die die Zersetzung fördernden Verunreinigungen zu entfernen. Die hierbei angewandten Temperaturen liegen zwischen 0° und 150°C.

Dieses Verfahren eignet sich besonders zur Abtrennung aller Hydrosilylierungskatalysatoren, d.h. löslicher Hydrosilylierungskatalysatoren, wie allgemein den Komplexe des Platins, wie z.B. der Speier Katalysator (Hexachloroplatinsäure in Isopropanol bzw. Alkohol), Komplexe des Platins mit Tetramethyldivinyldisiloxane (Karstedt Katalysator) als auch Pt-Katalysatoren auf diversen Trägern, wie im Stand der Technik oben beschrieben. Zur Abtrennung von den die Peroxidzersetzung fördernden Katalysatoren und Verunreinigungen versetzt man das entsprechende Polyetherpolysiloxan mit 0,1- 5 Gew.-% Aktivkohle 0 - 60 Gew.% Lösungsmittel, wie Ethanol, Isopropanol und 0-5 Gew.-% Wasser. Diese Mischung wird dann 1 Stunde bei 20-150°C , bevorzugt bei 70-100 °C gerührt. Unter Vakuum wird dann das Lösungsmittel durch Verdampfung zu diesem Zeitpunkt oder ggf. bei zu hoher Viskosität des Polyetherpolysiloxanes später nach dem Filtrieren entfernt. Anschließend wird diese Dispersion abgekühlt, mit 0-5 Gewichts -% Filterhilfsmittel (z.B.Diatomeenerde, Silkate, anorganische Oxide, poröse Adsorbentien, wie Kieselgele, Aktivkohlen, poröse Harze, Cellulosenpulvern, -geweben) versetzt und über einen Tiefenfilter Seitz-Typ EK oder EKS filtriert. Unter Vakuum wird jetzt, falls nicht schon vor dem Filtrieren, das Lösungsmittel durch Verdampfung entfernt. In einer Polyetherpoysiloxan Mischung, die 5 bis 10 ppm Platin eines Hydrosilylierungskatalysators enthält, kann man mit einem einzelnen Adsorptions- und Filtrationsschritt, in Abhängigkeit vom Typ der Aktivkohle, der Menge Aktivkohle verbleibende Platingehalte von 0,2 bis 1,5 ppm Platin erreichen.
Die Platinbestimmung erfolgt mit ICP-MS (Inductive Coupled Plasma Massenspektrometrie - Nachweisgrenze Pt: 0,003 ppm)
Als Aktivkohlen können nahezu alle Typen (Norit, Jacobi, Chemviron) mit BET-Oberflächen von 100-2000 m²/g, pH-Werten von 1-10 und Partikeldurchmessern von 5-1000 mµ oder gröberen Garanulaten eingesetzt werden. Bevorzugt sind aber BET-Oberflächen von 800-2000 m²/g, pH-Werten von 2-8 und Partikeldurchmessern von 35-100 mµ.
Bei der Wahl der Aktivkohle muß ein Kompromiß aus Adsorptionsleistung und zugegebener Aktivkohlemenge getroffen werden, damit die Ziele eines geringen Metallgehaltes sowie geringer Farbzahl, d.h. große Mengen Aktivkohle und damit hohe Viskosität, bei möglichst geringem Verfahrensaufwand, d.h. mit einem Filtrationsschritt, optimal erreicht werden.

Gleichzeitig erfolgt mit Hilfe dieses Reinigungsverfahrens eine Verminderung von verfärbenden bzw. trübenden, die Peroxidzersetzung fördernden Verunreinigungen. Die Bewertung dieser zusätzlichen Verunreinigungen erfolgt z.B. mit der einer Farbzahl-Messung über ein Fotometer nach Dr. Lange Köln mit einem Gerät des Typs Lico 200 / 300 in 50 mm Rechteckküvetten. Das Ergebnis wird entweder nach dem CIE-System als L*-, a*-, b*-Wert , lod- oder Hazen-Farbzahl ausgewiesen. Hier wird die lod-Farbzahl zur Bewertung bevorzugt.

Bevorzugt weisen die erfindungsgemäß verwendeten Polyetherpolysiloxane, insbesondere die nach dem zuvor beschriebenen Verfahren hergestellt oder nach der Hydrosilylierung gereinigt werden, einen Gehalt der oben erwähnten Hydrosilylierungskatalysatoren, insbesondere einen Platingehalt von maximal 10 ppm, bevorzugter maximal 5 ppm, besonders bevorzugt maximal 1,2 ppm und noch bevorzugter maximal 1 ppm auf.
Die lod- Farbzahl liegt zwischen 0 bis 5 bevorzugt zwischen 0,1 bis 1.
Der Platingehalt in der Reinigungszusammensetzung liegt somit unter 0,75 ppm Pt , bevorzugt unter 0,08, besonders bevorzugt unter 0,003 ppm Pt.

Alternativ kann die Hydrosilylierungsreaktion auch in Gegenwart solcher Katalysatoren durchgeführt werden, die sich nach der Reaktion wieder weitestgehend von den Polyetherpolysiloxanen durch einfache Abtrennung abtrennen lassen. Solche Übergangsmetallkatalysatoren, sind z.B. diejenigen, die auf ein festes und in der Reaktionsmischung unlösliches Trägermaterial aufgebracht sind. Sie lassen sich anschliessend durch einfaches Filtrieren oder Dekantieren bis zu einem Restgehalt an Übergangsmetall von bis zu weniger als 1 ppm abtrennen. Beispiele für derartige Katalysatoren sind Übergangsmetalle wie Platin, Rhodium und Palladium welche auf Trägermaterialien wie Kieselgel, Aluminiumoxid, Titandioxid, Aktivkohle oder weitere mineralische Materialien aufgebracht sind.
Dieses Verfahren bietet nur dann Vorteile, wenn wegen der Art des Katalysatorträgers keine weitere Feinfiltration notwendig ist. Dieses Verfahren ist deshalb dann bevorzugt, wenn die Filtration durch einen geeigneten Katalysatorträger oder ein nachträglich zugesetztes Adsorptions- oder Komplexierungsmittel, keine Feinstfiltration erfordert, wie sie bei der Abtrennung von vielen Aktivkohlen benötigt wird.

Die Herstellung der erfindungsgemässen Zusammensetzungen erfolgt zweckmäßig durch Zusammengeben der Komponenten a) bis d) sowie gegebenenfalls der Komponenten e) und f). Bevorzugt wird das verwendete Polyetherpolysiloxan zuvor der Reinigungsbehandlung mit Aktivkohle unterworfen. In einer besonders bevorzugten Variante zur Herstellung der erfindungsgemäßen Zusammensetzung werden zunächst die Komponenten a), eine Teilmenge von c), b) und d) sowie gegebenenfalls die Komponenten e) und f) miteinander vermischt und anschließend wird die restliche Komponente c) zusetzt. Bevorzugt wird die Menge der Komponente c) so gewählt, dass sich ein pH-Wert von 0 bis 7 ergibt.

Eine bevorzugte erfindungsgemäße Zusammensetzung wird erhalten durch Zusammengeben von
- a) Wasser,
- mindestens einer Peroxid-Verbindung b), in einer Menge, dass sich 0,001 - 10 Gew.% peroxidischer Sauerstoff in der Zusammensetzung ergibt,
- mindestens einer Säure c), in einer Menge, dass sich ein pH-Wert der Zusammensetzung von 0 bis 7 bevorzugt 0 bis 5 ergibt,
- 0,01 - 7,5 Gew.% bevorzugt 0,05 - 5 Gew.% mindestens eines Polyetherpolysiloxans d),
- 0 - 7,5 bevorzugt 0,05- 5 Gew. %Gew.% mindestens eines niedermolekularen Siloxans e),
- 0 - 20 Gew.% bevorzugt 0-15 Gew.% mindestens eines Hilfsstoffs f),
wobei sich die Gewichtsangaben jeweils auf die Gesamtmenge der Zusammensetzung beziehen.

Die erfindungsgemäße Zusammensetzung kann wahlweise die Komponente e) mindestens ein niedermolekulares Siloxan enthalten, wie z.B. cyclische, verzweigte oder lineare Polyorganosiloxane mit einem Molgewicht von zweckmäßig unter 1000 Dalton. Bevorzugt sind cyclische Siloxane, wie das Octamethylcyclotetrasiloxan, Decamethylcyclopentasiloxan und lineare Siloxane wie Decamethyltetrasiloxan, Pentamethylalkyldisiloxan, Heptamethylalklytrisiloxan. Bevorzugt sind cyclische und lineare Siloxane mit einem Siedepunkt von unter 230°C.

Der Einsatz dieser niedermolekularen Siloxane dient der Vermeidung von Wiederanhaftung von Schmutz und der Pflege der Oberfläche.

Weiterhin enthalten die erfindungsgemässen Zusammensetzungen gegebenenfalls mindestens einen Hilfsstoff f). Dabei handelt es sich insbesondere um für Reinigungsmittel typische Bestandteile handelsüblicher Reinigungsmittel wie z.B. Duftstoffe, Tenside, Lösemittel, wie Alkohole, Lösungsvermittler, Sequestiermittel (Ullmann's Encyclopedia of Industrial Chemistry, Sixth Ed. 2002 Electron. Rel.) Farbstoffe, Konservierungsmittel, Biozide und Verdicker. Eine umfassende Zusammenstellung von möglichen Bestandteilen findet sich z.B. im Jahrbuch für den Praktiker (aus der Öl-, Fett-, Seifen-, Körperpflegemittel-, Wachs- und sonstigen Chem.-Techn. Industrie), 22. Ausgabe, 1979. Bevorzugt sind Duftstoffe, Tenside, Sequestiermittel, Verdicker).
Die Verwendung von Alkoholen oder Lösemitteln als Komponente f) ist beispielsweise vorteilhaft, wenn schwierige Reinigungsprobleme zu lösen sind oder die schnelle Verdampfung der Komponente f) erwünscht ist. Der Alkohol oder die Lösemittel müssen frei von peroxidzersetzenden Stoffen sein. Alkohole sollten vorzugsweise in ihrem molaren Anteil nicht die des Peroxides übersteigen.
Alkohol schließt geradkettige, verzweigte und/oder cyclische Alkohole mit bis zu acht Kohlenstoffatomen ein. Cyclische Alkohole schließen insbesondere solche mit 5 oder 6 Kohlenstoffatomen ein. Bevorzugt sind geradkettige Monoalkohole, wie Ethanol und Propanol.
Erfindungsgemäß können also auch Wasser-Alkohol-Gemische verwendet werden.

Die erfindungsgemäßen Zusammensetzungen eignen sich besonders zur reinigenden, pflegenden und/oder desinfizierenden Behandlung von Substratoberflächen, wie den Oberflächen mineralischer, metallischer, duroplastischer oder thermoplastischer Substrate, wie Keramik, Fliesen, Glas, Plaste, emaillierte Flächen, Metalle und Fussbodenbeläge. Besonders bevorzugt dient die erfindungsgemäße Zusammensetzungen als Reinigungszusammensetzung. Mit ihnen ist es möglich, die Anhaftung von Schmutzpartikeln an einer behandelten Oberfläche zu verringern, das Ablaufen von Wasser, Schmutzwasser sowie sonstigen wässrigen Lösungen von behandelten Oberflächen zu verbessern, die Bildung von Rückständen wie Kalk, Kalkseifen, Urinstein und Abwasserrückständen an der behandelten Oberfläche zu verringern sowie die damit behandelten Oberflächen zu desinfizieren.

### Beispiele

### Beispiel 1

### Herstellung eines Polyetherpolysiloxan über Hydrosilylierung

1483,8 g Allylpolyether H₂C=CH-CH₂-O-(CH₂CH₂O)₁₁CH₂--CH₂OH werden in 314 g Isopropanol gelöst unter Stickstoffgas und auf 80-95 °C unter Rückfluss erhitzt. In der Hitze gibt man dann zunächst 89 mg Platinkatalysator-Lösung (12% Pt, entsprechend 4,3 ppm Pt der Mischung) eines Pt°-Di-vinyltetramethyl-disiloxan-Komplexes zu und dosiert anschließend 612,7 g eines Polymers SiH-Polymers der Zusammensetzung. Me₃SiO(Me₂SiO)₁₅(MeHSiO)₅SiMe₃(M-D₁₅-D^{H}₅-M).
Dieses Polymer hat einen Gehalt von 3,2 mmol/g SiH. Die Hydrosilylierungsreaktion gibt sich durch Temperaturerhöhung und verstärkten Rückfluß zu erkennen. Nach drei Stunden bei 82-95 °C wird das Lösungsmittel destillativ entfernt.

Man erhält ein verfärbtes Polyetherpolysiloxan in 98% Umsatz SiH It. Rest-SiH-Gehalt einer alkalischen volumetrischen Titration. Der Pt-Gehalt des Filtrates liegt bei 5,1 ppm, die lod-Farbzahl bei 6,5.

### Beispiel 2

### Herstellung eines Polyetherpolysiloxan mit geringem Pt-Gehalt

1483,8 g Allylpolyether H₂C=CH-CH₂-O-(CH₂-CH₂O)₁₁CH₂-CH₂OH werden in 314 g Isopropanol gelöst unter Stickstoffgas und auf 80-95 °C erhitzt. In der Hitze gibt man dann zunächst 52 mg Platin-Katalysatorlösung (12% Pt, entspricht 2,6 ppm Pt) eines Pt⁰-Divinyltetra-methyldisiloxan-Komplexes zu und dosiert anschließend 612,7 g eines Polymers SiH-Polymers der Zusammensetzung. Me₃SiO(Me₂SiO)₁₅(MeHSiO)₅SiMe₃(M-D₁₅-D^{H}₅-M).
Dieses Polymer hat einen Gehalt von 3,2 mmol/g SiH Die Hydrosilylierungsreaktion gibt sich durch Temperaturerhöhung und verstärkten Rückfluß zu erkennen. Nach drei Stunden bei 82-95 °C wird das Lösungsmittel destillativ entfernt. Man erhält ein verfärbtes Polyetherpolysiloxan in 98% Umsatz SiH lt. Rest-SiH-Gehalt der alkalischen volumetrischen Titration. Der Pt-Gehalt des Filtrates liegt bei 3 ppm, die lod-Farbzahl bei 4.

### Beispiel 3

### Reinigung eines Polyetherpolysiloxanes

Man versetzt 75g des Polyetherpolysiloxan aus Beispiel 1 mit 25 g Isopropanol mit ca. 0,2 Gewichtsteilen Aktivkohle Norit des Typs CA 1 (BET-Oberfläche= 1400 m²/g, pH = 2, d50%= 41µm) sowie ca, einem Gewichtsteil Wasser. Diese Mischung wird dann 1 Stunde bei 82-85°C unter N2-Atmosphäre bei Rückfluss gerührt. Anschließend verdampft man im Vakuum das Isopropanol sowie niedrigsiedende Polyetherbestandteile und kühlt auf 25 °C ab. Das verbleibende Polyetherpolysiloxan wird mit 0,2 Gewichtsteilen eines Filterhilfsmittels (Diatomeenerde Dicalite WF) versetzt und über einen Tiefenfilter Seitz Typ EKS filtriert. Man erhält ein klare farblose Flüssigkeit mit einer lod-Farbzahl von 1 und einem Platingehalt nach ICP-MS 1,2 ppm.

### Beispiel 4

### Reinigung eines Polyetherpolysiloxanes

Man versetzt 75g des Polyetherpolysiloxan aus Beispiel 1 mit 25 g Isopropanol mit einem Gewichtssteil Aktivkohle Norit des Typs CA 1 (BET-Oberfläche= 1400 m²/g , pH = 2, d50% = 41µm) sowie ca. einem Gewichtsteil Wasser. Diese Mischung wird dann 1 Stunde bei 82-85°C unter N2-Atmosphäre bei Rückfluss gerührt. Anschließend verdampft man im Vakuum das Isopropanol sowie niedrigsiedende Polyetherbestandteile und kühlt auf 25 °C ab. Das verbleibende Polyetherpolysiloxan wird mit einem Gewichtsteil eines Filterhilfsmittels (Diatomeenerde Dicalite WF) versetzt und über einen Tiefenfilter Seitz Typ EKS filtriert. Man erhält ein klare farblose Flüssigkeit mit einer lod-Farbzahl von 0,2 und einem Platingehalt nach ICP-MS 0,24 ppm.

### Beispiel 5

**Bewertung der Lagerstabilitäten bei 25 und 50 °C** Man vermischt 96 g 0,1 m Schwefelsäure, 1 g Wasserstoffperoxidlösung (ca. 35%) und 3 g der in den Beispielen 1 bis 4 erhaltenen Polyetherpoly-siloxane(M-D₁₅-D^{R}₅-M mit R= -(CH₂)₃O(CH₂CH₂O)₁₁-CH₂CH₂OH) miteinander zu einer Reingungszusammensetzung in der Weise , dass hierzu jeweils die Polyetherpolysiloxane aus den Beispielen 3 bis 4 mit unterschiedlichem Platingehalt und geringer lod-Farbzahl bzw. diejenigen aus Beispiel 1 und 2 mit erhöhtem Platingehalt und mit erhöhter Farbzahl eingesetzt werden. Der Einfluß des Platingehaltes und der Farbzahl wird für eine Lagerung der Reinigungszusammensetzung bei 25°C in Tabelle 1 sowie 50°C in Tabelle 2 wiedergeben. Dazu mißt man den verbleibenden Gehalt an peroxidischem (aktivem) Sauerstoff (fotometrische Absorption bei 508 nm des gebildetem Eisen(III)-rhodanids).
Für die Bestimmung der Lagerstabilität unter verschärften Bedingungen wurden die Proben mit einem Uhrglas abgedeckt, aber nicht gasdicht verschlossen, bei einer Temperatur von 50°C in einem Trockenschrank gelagert und in regelmässigen Abständen auf den Gehalt an peroxidischem, aktivem Sauerstoffgehalt untersucht. Die Ergebnisse sind in Tabelle 1 und 2 dargestellt.

### Vergleichsversuch V1

Man vermischt 96 g 0,1 m Schwefelsäure, 1 g Wasserstoffperoxidlösung (ca. 35%) ohne einen Zusatz eines Polyetherpolysiloxanes zu einer Reinigungszusammensetzung und bewertet die Zersetzung des peroxidischen Sauerstoffes über die Dauer der Lagerung bei 25 °C und 50 °C -siehe Tab. 1 u. 2. Der Platingehaltdieser Reinigungszusammensetzung lag bei unter 0,03 ppm .

**Tabelle 1: Aktiver Sauerstoff bei Lagerung bei 25°C**

| **Beispiel** | **V1** | **4** | **3** | **2** | **1** |
|---|---|---|---|---|---|
| [Tage] | [ppm] O | [ppm] O | [ppm] O | [ppm] O | [ppm] O |
| **0** | 1654 | 1711 | n.b. | 1629 | 1600 |
| **7** | 1565 | 1724 | n.b. | 1519 | 1526 |
| **15** | 1508 | 1708 | n.b. | 1483 | 1479 |
| **19** | 1513 | 1795 | n.b. | 1544 | 1532 |
| **21** | 1493 | 1751 | n.b. | 1513 | 1503 |
| **28** | 1422 | 1743 | n.b. | 1491 | 1502 |

Tab.1 zeigt, dass der peroxidische Sauerstoff in der Reinigungszusammensetzung, die zusätzlich ein Polyetherpolysiloxan enthält, langsamer zersetzt wird als derjenige in der des Vergleichsversuches V1 ohne ein Polyetherpolysiloxan.

Tabelle 2 gibt die Lagerstabiltät für eine verschärfte bzw. zeitgeraffte Lagerung wieder, in dem man die Temperatur auf 50 °C erhöht.
Tab. 2 zeigt dabei, dass die Zersetzung mit steigender Reinheit des Polyetherpolysiloxans verlangsamt wird.
Besonders hervorzuheben ist, dass die Probe mit einem Platingehalt von 0.24 ppm Pt und geringer Farbzahl keinen nachweisbaren Abbau von Wasserstoffperoxid bei 25°C aufweist.

**Tabelle 2: Aktiver, peroxidischer Sauerstoff in [ppm] bei Lagerung bei 50 °C**

| **Beispiel** | **V1** | **4** | **3** | **2** | **1** |
|---|---|---|---|---|---|
| [Tage] | [ppm] O | [ppm] O | [ppm] O | [ppm] O | [ppm] O |
| **0** | 1627 | 1734 | 1466 | 1664 | 1664 |
| **6** | 1105 | 1632 | 1217 | 1387 | 1454 |
| **16** | 651 | 1376 | 1065 | 989 | 948 |
| **20** | 510 | 1332 | 1034 | 918 | 936 |
| **29** | 304 | 1136 | 906 | 689 | 734 |

## Patentansprüche

1. Zusammensetzung, erhältlich durch Zusammengeben von:
a) Wasser ,
b) mindestens einer Peroxid-Verbindung,
c) mindestens einer Säure,
d) mindestens einem Organopolysiloxan mit mindestens einer Alkylgruppe, wobei die Alkylgruppe mindestens eine Ethergruppe und gegebenenfalls mindestens eine OH-Gruppe enthält,
e) gegebenenfalls mindestens einem niedermolekularen Siloxan und
f) gegebenenfalls mindestens einem Hilfsstoff.

2. Zusammensetzung nach Anspruch 1, worin das Organopolysiloxan d) mindestens eine Verbindung der allgemeinen Formeln (I), (II) und/oder (III) ist: 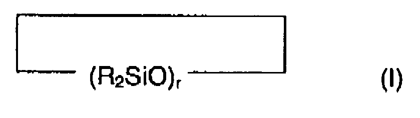
R₃SiO(R₂SiO)ₓSiR₃ v
[(R₃SiO_{1/2h})₁₋₄(SiO_{4/2})]_{y} (III)
worin
r = 3-10 und
x = 0-200 ist,
y = 1-1000
die Substituenten R gleich oder verschieden sein können und aus der Gruppe ausgewählt werden, die besteht aus:
geradkettigem und verzweigtem C₁-C₁₂-Alkyl, C₆-C₁₄-Cycloalkyl, Phenyl, Phenylethyl, -(CH₂)ₙC_{z}F_{2z+1}, worin n = 1-12 und z = 1-12 ist, und einer einer Alkylgruppe wobei die Alkylgruppe mindestens eine Ethergruppe und gegebenenfalls mindestens eine OH-Gruppe enthält,
mit der Maßgabe, dass mindestens ein Substituent R je Polysiloxanmolekül die genannte Alkylgruppe darstellt, die mindestens eine Ethergruppe und gegebenenfalls mindestens eine OH-Gruppe enthält.

3. Zusammensetzung nach Anspruch 1 oder 2, worin die Alkylgruppe, die mindestens eine Ethergruppe und gegebenenfalls mindestens eine OH-Gruppe enthält, als Substituent R die Formel (IV) aufweist:
-Z-(CH₂CH₂O)ₐ(CH₂CH{CH₃}O)_{b}(CH₂CH₂CH₂CH₂O)_{c}X_{d}-R¹ (IV)
worin:
Z = geradkettiger oder verzweigter Alkyl- oder Cycloalkylrest, der jeweils durch -O-, und/oder -CO- unterbrochen und gegebenenfalls durch mindestens eine OH-Gruppe substituiert sein kann,
X = -CO-, -COO-, -CONR²-, worin R² H oder C₁-C₆ Alkyl ist,
a = 0 bis 2000,
b = 0 bis 2000,
c = 0 bis 100, und
a+b+c ≥ 0
d = 0 oder 1, und
R¹ =
H,
C₁-C₂₅ Alkyl,
Amino(C₁-C₂₅)alkyl,
(C₁-C₂₅)Alkoxypoly(C₂-C₄)alkylenoxy(C₁-C₂₅-)alkyl,
Hydroxypoly(C₂-C₄)alkylenoxy(C₁-C₂₅)alkyl,
Aminopoly(C₂-C₄)alkylenoxy(C₁-C₂₅)alkyl,
C₆-C₁₀ Aryl,
(C₆-C₁₀)Aryl(C₂-C₆-)alkyl, und
-(CH₂)ₙC_{z}F_{2z+1}, worin n = 1-12 und z = 1-12 ist,
wobei in den zuvor genannten Resten R gegebenenfalls ein bis drei -CH2-Gruppen durch X, das wie oben definiert ist, -O- oder -NR³-, worin R³ H oder C₁-C₆ Alkyl ist, ersetzt sein können.

4. Zusammensetzung nach einem der Ansprüche 1 bis 3, worin die Peroxid-Verbindung b) Wasserstoffperoxid ist.

5. Zusammensetzung nach einem der Ansprüche 1 bis 4, erhältlich durch Zusammengeben von
- Wasser a),
- mindestens einer Peroxid-Verbindung b), in einer Menge, dass sich 0,001 - 10 Gew.% peroxidischer Sauerstoff in der Zusammensetzung ergeben,
- mindestens einer Säure c), in einer Menge, dass sich ein pH-Wert der Zusammensetzung von 0 bis 7 ergibt,
- 0,01 - 7,5 Gew.% mindestens eines Organopolysiloxans d),
- 0 - 7,5 Gew.% mindestens eines niedermolekularen Siloxans e),
- 0 - 4,1 Gew.% mindestens eines Hilfsstoffs f),
wobei sich die Gew.-Angaben jeweils auf die Gesamtmenge der Zusammensetzung beziehen.

6. Zusammensetzung nach einem der Ansprüche 1 bis 5, **dadurch gekennzeichnet, dass** das Organopolysiloxan d) bei 25°C mindestens in Wasser löslich oder mindestens selbstemulgierend ist.

7. Verfahren zur Herstellung der Zusammensetzung nach einem der Ansprüche 1 bis 6, welches das Zusammengeben der Komponenten a) bis d) sowie gegebenenfalls der Komponenten e) und f) beinhaltet.

8. Verfahren zur Herstellung der Zusammensetzung nach einem der Ansprüche 1 bis 6 , **dadurch gekennzeichnet, dass** man die Komponenten a), einer Teilmenge von c), b) und d) sowie gegebenenfalls die Komponenten e) und f) miteinander vermischt und anschließend die restliche Teilmenge der Komponenten c) zusetzt.

9. Verfahren nach Anspruch 7 oder 8, **dadurch gekennzeichnet, dass** es die vorherige Behandlung des (der) Organopolysiloxans(e) d) mit Aktivkohle umfaßt.

10. Verfahren nach Anspruch 7 oder 8, **dadurch gekennzeichnet, dass** die Menge der Komponente c) so gewählt wird, dass sich ein pH-Wert von 0 bis 7 ergibt.

11. Verwendung der Zusammensetzungen nach einem der Ansprüche 1 bis 6 zur reinigenden, pflegenden und/oder desinfizierenden Behandlung von Substratoberflächen.

12. Verwendung der Zusammensetzungen nach einem der Ansprüche 1 bis 6 als Reinigungszusammensetzung.

## Claims

1. Composition, obtainable via combination of:
a) water,
b) at least one peroxide compound,
c) at least one acid,
d) at least one organopolysiloxane having at least one alkyl group, where the alkyl group contains at least one ether group and, if appropriate, contains at least one OH group,
e) if appropriate, at least one low-molecular-weight siloxane and
f) if appropriate, at least one auxiliary.

2. Composition according to Claim 1, in which the organopolysiloxane d) is at least one compound of the general formulae (I), (II) and/or (III): 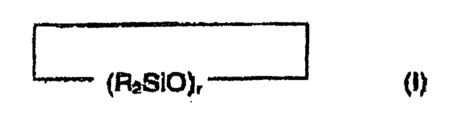
R₃SiO(R₂SiO)ₓSiR₃ (II)
[(R₃SiO_{1/2})₁₋₄(SiO_{4/2})]_{y} (III)
wherein
r = from 3 to 10 and
x = from 0 to 200,
y = from 1 to 1000
and the substituents R can be identical or different and are selected from the group consisting of:
straight-chain and branched C₁-C₁₂-alkyl, C₆-C₁₄-cycloalkyl, phenyl, phenylethyl, -(CH₂)ₙC_{z}F_{2z+1}, where n = from 1 to 12 and z = from 1 to 12, and an alkyl group, where the alkyl group contains at least one ether group and, if appropriate, contains at least one OH group,
with the proviso that at least one substituent R in each polysiloxane molecule is the alkyl group mentioned which contains at least one ether group and, if appropriate, contains at least one OH group.

3. Composition according to Claim 1 or 2, in which the alkyl group which contains at least one ether group and, if appropriate, contains at least one OH group has, as substituent R, the formula (IV):
-Z-(CH₂CH₂O)ₐ(CH₂CH(CH₃)O)_{b}(CH₂CH₂CH₂CH₂O)_{c}X_{d}-R¹ (IV)
in which:
Z = straight-chain or branched alkyl or cycloalkyl, each of which can have interruption by -0-, and/or by -CO-, and each of which can have substitution, if appropriate, by at least one OH group,
X = -CO-, -COO-, -CONR²-, in which R² is H or C₁-C₆-alkyl,
a = from 0 to 2000,
b = from 0 to 2000,
c = from 0 to 100, and
a+b+c ≥ 0
d = from 0 or 1, and
R¹ =
H,
C₁-C₂₅-alkyl,
amino (C₁-C₂₅) alkyl,
(C₁-C₂₅)alkoxypoly(C₂-C₄)alkylenoxy(C₁-C₂₅)alkyl,
hydroxypoly(C₂-C₄)alkylenoxy(C₁-C₂₅)alkyl,
aminopoly(C₂-C₄)alkylenoxy(C₁-C₂₅)alkyl,
C₆-C₁₀-aryl,
(C₆-C₁₀) aryl (C₂-C₆) alkyl, and
-(CH_{z})ₙC_{z}F_{2z+1}, in which n = from 1 to 12 and z = from 1 to 12,
where, in the abovementioned radicals R, if appropriate, from one to three -CH₂- groups can have been replaced by X, defined as above, -O- or -NR³-, in which R³ is H or C₁-C₆-alkyl.

4. Composition according to any of Claims 1 to 3, in which the peroxide compound b) is hydrogen peroxide.

5. Composition according to any of Claims 1 to 4, obtainable via combination of
- water a),
- an amount of at least one peroxide compound b) such as to give from 0.001 to 10% by weight of peroxidic oxygen in the composition,
- an amount of at least one acid c) such as to give a Ph of from 0 to 7 for the composition,
- from 0.01 to 7.5% by weight of at least one organopolysiloxane d),
- from 0 to 7.5% by weight of at least one low-molecular-weight siloxane e),
- from 0 to 4.1% by weight of at least one auxiliary f),
where the weight data are always based on the total amount of the composition.

6. Composition according to any of Claims 1 to 5, **characterized in that** the organopolysiloxane d) is at least self-emulsifying or at least soluble in water at 25°C.

7. Process for preparation of the composition according to any of Claims 1 to 6, which includes the combining of components a) to d), and also, if appropriate, of components e) and f).

8. Process for preparation of the composition according to any of Claims 1 to 6, **characterized in that** components a), a portion of c), b) and d), and also, if appropriate, components e) and f) are mixed with one another and then the remaining portion of components c) is added.

9. Process according to Claim 7 or 8, **characterized in that** it encompasses the prior treatment of the organopolysiloxane(s) d) with activated charcoal.

10. Process according to Claim 7 or 8, **characterized in that** the amount of component c) is selected so as to give a pH of from 0 to 7.

11. Use of the compositions according to any of Claims 1 to 6 for treatment of substrate surfaces with the purpose of cleaning, polishing and/or disinfecting.

12. Use of the compositions according to any of Claims 1 to 6 as cleaning composition.

## Revendications

1. Composition susceptible d'être obtenue par mélange de :
a) l'eau,
b) au moins un composé peroxyde,
c) au moins un acide,
d) au moins un organopolysiloxane avec au moins un groupe alkyle, dans lequel le groupe alkyle contient au moins un groupe éther et éventuellement au moins un groupe OH,
e) éventuellement au moins un siloxane de faible masse moléculaire et
f) éventuellement au moins un agent auxiliaire.

2. Composition selon la revendication 1, dans laquelle l'organopolysiloxane d) est au moins un composé de formules générales (I), (II) et/ou (III) : 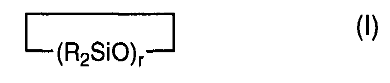
R₃SiO(R₂SiO)ₓSiR₃ (II)
[(R₃SiO_{1/2})₁₋₄(SiO_{4/2})]_{y} (III)
dans lesquelles
r = 3-10 et
x = 0-200,
y = 1-1000
les substituants R peuvent être identiques ou différents et sont choisis dans le groupe constitué par :
les groupes alkyle en C₁-C₁₂ linaires et ramifiés, cycloalkyle en C₆-C₁₄, phényle, phényléthyle, -(CH₂)ₙC_{z}F_{2z+1}, où n = 1-12 et z = 1-12, et un d'un groupe alkyle, dans lequel le groupe alkyle contient au moins un groupe éther et éventuellement au moins un groupe OH,
avec la condition qu'au moins un substituant R de chaque molécule de polysiloxane représente ledit groupe alkyle, qui contient au moins un groupe éther et éventuellement au moins un groupe OH.

3. Composition selon la revendication 1 ou 2, dans laquelle le groupe alkyle qui contient au moins un groupe éther et éventuellement au moins un groupe OH présente comme substituant R la formule (IV) :
-Z-(CH₂CH₂O)ₐ(CH₂CH(CH₃)O)_{b}(CH₂CH₂CH₂CH₂O)_{c}X_{d}-R¹ (IV)
dans laquelle :
Z = un radical alkyle linéaire ou ramifié ou cycloalkyle, qui chaque fois peut être interrompu par -O- et/ou -CO- et éventuellement substitué par au moins un groupe OH,
X = -CO-, -COO-, -CONR²-, où R² est H ou un groupe alkyle en C₁-C₆,
a = 0 à 2000,
b = 0 à 2000,
c = 0 à 100, et
a+b+c ≥ 0
d = 0 ou 1, et
R1 =
H,
un groupe alkyle en C₁-C₂₅,
aminoalkyle en C₁-C₂₅,
alcoxy(en C₁-C₂₅)polyalkylèneoxy(en C₂-C₄)alkyle(en C₁-C₂₅),
hydroxypolyalkylèneoxy(en C₂-C₄)alkyle(en C₁-C₂₅),
aminopolyalkylèneoxy(en C₂-C₄)alkyle(en C₁-C₂₅),
aryle en C₆-C₁₀,
aryl(en C₆-C₁₀)alkyle(en C₂-C₆), et
-(CH₂)ₙC_{z}F_{2z+1}, où n = 1-12 et z = 1-12,
où dans les radicaux R cités précédemment éventuellement un à trois groupes CH₂ peuvent être remplacés par X, qui est défini ci-dessus, -O- ou -NR³-, dans lequel R³ est H ou un groupe alkyle en C₁-C₆.

4. Composition selon l'une des revendications 1 à 3, dans laquelle le composé peroxyde b) est le peroxyde d'hydrogène.

5. Composition selon l'une des revendications 1 à 4, susceptible d'être obtenue par mélange de
- l'eau a),
- au moins un composé peroxyde b), en une quantité qui s'élève à 0,001 - 10 % en poids d'oxygène peroxydique dans la composition,
- au moins un acide c), en une quantité qui fournit une valeur de pH de la composition de 0 à 7,
- 0,01 - 7,5 % en poids d'au moins un organopolysiloxane d),
- 0 - 7,5 % en poids d'au moins un siloxane de faible masse moléculaire e),
- 0 - 4,1 % en poids d'au moins un agent auxiliaire f),
dans laquelle les données en poids sont chaque fois rapportées à la quantité totale de la composition.

6. Composition selon l'une des revendications 1 à 5, **caractérisée en ce que** l'organopolysiloxane d) est soluble ou au moins auto-émulsifiable dans l'eau à 25 °C.

7. Procédé de préparation de la composition selon l'une des revendications 1 à 6, qui englobe le mélange des composants a) à d) ainsi qu'éventuellement des composants e) et f).

8. Procédé de préparation de la composition selon l'une des revendications 1 à 6, **caractérisé en ce qu'**on mélange les uns avec les autres les composants a), une quantité partielle de c), b) et d) ainsi qu'éventuellement les composants e) et f) et ensuite on ajoute le reste de la quantité partielle des composants c).

9. Procédé selon la revendication 7 ou 8, **caractérisé en ce qu'**il comprend le traitement préalable du (des) organopolysiloxane(s) par du charbon actif.

10. Procédé selon la revendication 7 ou 8, **caractérisé en ce que** la quantité des composants c) est choisie de manière que la valeur du pH soit de 0 à 7.

11. Utilisation des compositions selon l'une des revendications 1 à 6 pour le traitement de nettoyage, entretien et/ou désinfection de surfaces de substrats.

12. Utilisation des compositions selon l'une des revendications 1 à 6 comme composition de nettoyage.
